# FASCICULE DE BREVET EUROPEEN

(11) **EP 2 029 355 B1**
(45) Date de publication et mention de la délivrance du brevet: **29.03.2017**
(21) Numéro de dépôt: 07765391.3
(22) Date de dépôt: 13.06.2007
(51) Int. Cl.: B32B 17/06, C03C 27/12, C09C 1/30

(54) **VITRAGE ANTI-FEU**
BRANDSCHUTZVERGLASUNG
FIRE-PROTECTIVE GLAZING

(30) Priorité: 15.06.2006 EP 06115543
(43) Date de publication de la demande: 04.03.2009
(73) Titulaire: AGC Glass Europe, 1348 Louvain-la-Neuve (BE)
(72) Inventeur: BONNEFOY, Frédéric, 6040 Jumet (BE); MATEAN, Camélia, 6040 Jumet (BE)
(74) Mandataire: Le Vaguerèse, Sylvain Jacques
(86) Numéro de dépôt international: PCT/EP2007/055816
(87) Numéro de publication internationale: WO 2007/144369

(56) Documents cités:
- DE-A1-102004 031 785
- FR-A1- 2 679 549
- US-A- 4 707 304
- US-B1- 6 521 347

## Description

La présente invention concerne les vitrages anti-feu comportant un ensemble de feuilles de verre et une ou plusieurs couches d'un silicate alcalin hydraté formant une couche intumescente.

Les vitrages anti-feu présentant ces compositions doivent répondre à une série de conditions difficiles à concilier. Ils doivent en premier garantir une bonne efficacité dans la résistance à l'épreuve du feu. Dans ce sens ils doivent faire obstacle à la propagation des fumées et flammes et constituer un écran contre la propagation de la chaleur notamment par rayonnement. Ces qualités nécessitent de ces vitrages notamment qu'aucune brèche n'apparaisse au moins pendant un certain temps lorsqu'ils sont soumis à l'épreuve du feu

En dehors des propriétés de résistance au feu, les vitrages doivent présenter une bonne transparence et être dépourvus des défauts qui nuisent à leur aspect esthétique. On sait en effet que les couches intumescentes à base de silicate alcalin hydraté peuvent être le siège de diverses altérations soit lors de leur production, soit ultérieurement en raison notamment de leur exposition prolongée à la chaleur ou aux rayonnements UV. Ces défauts se présentent en particulier sous la forme d'un voile ("haze") ou sous forme de bulles.

La maîtrise des compositions de ces silicates alcalins hydratés et celle des conditions production, ont permis pratiquement de s'affranchir de ces défauts, et d'obtenir des produits dont les qualités optiques se maintiennent tout au long de la vie de ces vitrages. Mais apparemment les mesures prises pour conduire à l'élimination de ces défauts ont mis en évidence une difficulté d'une autre nature.

A l'expérience en effet les vitrages pour lesquels pratiquement aucun défaut optique n'est décelable ont dans certains cas un comportement au feu qui peut se révéler moins satisfaisant pour la raison suivante. Ces vitrages, lorsqu'ils sont soumis aux tests de résistance au feu, peuvent accidentellement projeter des morceaux de verre et de la couche intumescente.

Les inventeurs, sans que l'invention soit liée à cette interprétation, attribuent ce phénomène à l'accumulation locale de vapeur provenant de l'eau du silicate en des points en nombre limité. Autrement dit l'absence des défauts ou des causes de ces défauts dans le matériau intumescent conduirait à concentrer la formation de vapeur jusqu'à produire localement une surpression telle qu'elle aboutirait à l'éclatement du feuilleté. Autrement dit encore la formation de la mousse qui garantit une certaine homogénéité d'expansion du matériau serait contrariée par l'absence de défauts servant en quelque sorte de germes initiateurs pour la formation des bulles, la multiplicité des bulles conduisant à une distribution homogène de celles-ci et à la limitation de leur développement.

Quelle que soit son origine, il est nécessaire de prévenir un tel comportement qui globalement réduit la résistance au feu des vitrages en question.

Les inventeurs ont montré qu'il est possible d'éviter très largement ces projections lors de l'épreuve au feu, en favorisant l'apparition de bulles en de multiples points du vitrage par l'incorporation d'éléments initiateurs ou de nucléation. Les éléments initiateurs sont avantageusement constitués de particules d'un matériau compatible avec le silicate alcalin du vitrage au contact duquel il est placé.

Par ailleurs les particules favorisant la formation de multiples bulles lorsque le vitrage est soumis au feu, ne doivent pas altérer les qualités optiques initiales des vitrages. Ces mêmes propriétés optiques doivent encore demeurer indépendamment du vieillissement de ces vitrages. Ces qualités optiques font notamment l'objet de détermination selon la norme EN 12 543.

Les particules doivent rester de dimensions très petites et être en quantités limitées pour ne pas conduire à une diffusion significative de la lumière. Avantageusement les particules introduites dans le vitrage présentent des dimensions qui ne dépassent pas 20*µ* et, de préférence, restent inférieures à 10*µ*, et de façon particulièrement préférée sont inférieures à 5*µ*.

Pour minimiser encore l'influence de ces particules sur la transparence du vitrage, on utilise avantageusement des particules d'un matériau dont l'indice de réfraction n'est pas très différent de celui du matériau intumescent lui-même.

Les particules préférées sont des particules de silice. Le verre est un autre matériau constitutif possible.

Le caractère fortement basique de ces silicates alcalins hydratés constituant le matériau intumescent peut conduire à une forme d'attaque superficielle de certains matériaux entrant dans la constitution des particules. Une telle attaque peut éventuellement conduire à une forme de "digestion" partielle qui peut minimiser encore l'incidence de la présence de ces particules sur les propriétés optiques des vitrages selon l'invention.

A l'expérience il est aussi apparu préférable d'utiliser des particules non poreuses ou à porosité limitée, indépendamment de leur composition. Le phénomène n'a pas fait l'objet d'une étude systématique, mais il semble que les particules "non-poreuses" sont plus efficaces dans la prévention des projections des morceaux du vitrage.

Quelle que soit la raison de ce comportement il est préféré d'utiliser des particules dont la surface spécifique ne soit pas trop élevée dans les dimensions précédemment indiquées. La surface spécifique est de préférence inférieure à 200m²/g. De façon préférée cette surface n'est pas supérieure à 100m²/g et plus avantageusement pas supérieure à 50m²/g.

Le nombre des particules peut varier très largement compte tenu de leur mode d'action pour favoriser l'apparition locale de multiples micro-bulles lors de l'épreuve au feu. Plus les particules sont nombreuses plus nombreuses sont les bulles formées et plus leurs dimensions sont réduites. Néanmoins pour ne pas risquer d'altérer les qualités optiques dans les conditions d'utilisation normales il est préférable de limiter le nombre des particules à ce qui est raisonnablement nécessaire pour prévenir le risque de projection indiqué précédemment.

Par ailleurs le nombre des particules n'est pas le seul facteur, intervient encore la distribution de celles-ci. Il est avantageux que les particules se distribuent aussi uniformément que possible sur toute la surface du vitrage. C'est le nombre des sites de formation des bulles qui permet en effet de répartir de façon homogène la pression engendrée lors de l'épreuve au feu par l'apparition de ces bulles. Lorsque les bulles apparaissent quasi simultanément en grand nombre, la formation de "poches" de vapeur d'eau peut être évitée.

Le nombre de particules n'est pas inférieur à 5/mm² de surface de vitrage. Il est avantageusement au moins égal à 20/mm², et de façon particulièrement préférée au moins 50/mm².

La quantité de bulles croissant avec les particules présentes, la limite supérieure n'est fonction que de ce qu'au-delà d'un certain nombre aucune amélioration sensible n'est plus constatée, et encore une fois cet accroissement ne peut plus qu'altérer les qualités optiques du vitrage. Pour cette raison on préfère limiter le nombre de particules à 500 par mm², et de préférence à 250par mm².

Une distribution homogène dans le matériau intumescent est possible. A l'expérience il apparaît néanmoins que le plus important est d'avoir une bonne répartition sur la surface du vitrage. Il semble en effet à peu près indifférent que les particules soient disposées dans le coeur du matériau intumescent ou à l'interface de celui-ci avec la feuille de verre. La faible épaisseur des couches intumescentes habituelles - elles n'excèdent pas généralement 3mm et sont le plus souvent de l'ordre de 1 à 2mm - fait sans doute que les bulles se développent dans le matériau ou à sa surface, la pression exercée par ces bulles sur le verre reste à peu près la même.

Il est possible de combiner l'introduction des particules dans la masse du silicate et l'application aux interfaces.

Pour constituer certains vitrages, on utilise une ou plusieurs couches intumescentes constituées préalablement. Cette ou ces couches sont alors placées entre les feuilles de verre au moment de l'assemblage du vitrage. Dans ce cas l'introduction des particules peut s'effectuer sur n'importe quelle interface couche intumescente/verre ou entre plusieurs couches intumescentes superposées. La localisation précise des particules peut offrir une certaine diversité.

Certains vitrages comprennent aussi l'assemblage d'au moins deux feuilles de verre préalablement revêtues chacune d'une couche intumescente, les deux couches intumescentes étant accolées l'une à l'autre. Ce type d'assemblage permet également l'introduction des particules entre les deux couches intumescente avant la réunion de ces couches.

L'application des particules à l'interface verre/silicate peut être réalisée à chaque interface. Mais, pour la même raison qui fait qu'il n'est pas nécessaire de distribuer les particules uniformément dans la masse, il n'apparaît pas non plus nécessaire de traiter toutes les interfaces lorsque l'épaisseur de la couche intumescente reste limitée aux valeurs indiquées ci-dessus. La seule condition à respecter est de bien distribuer les particules sur la surface du vitrage.

Lorsque les vitrages comportent plusieurs couches de silicate alcalin hydraté, il est préférable de traiter chacune de ces couches comme il a été dit précédemment.

La constitution des vitrages anti-feu comportant une ou plusieurs couches de silicate alcalin se fait le plus usuellement en assemblant des feuilles de verre sur lesquelles une couche de silicate alcalin à été préalablement séchée avec une feuille de verre ou avec une autre feuille de verre comportant également une couche de silicate. L'assemblage peut être fait par étuvage sous vide pour évacuer l'air restant entre les feuilles assemblées. Pour des raisons de coût on préfère cependant procéder à un calandrage des feuilles assemblées. Dans ce cas, pour chasser l'air résiduel, un liquide de liaison est appliqué à l'interface entre la couche intumescente et la feuille de verre qui lui est superposée. Ce liquide est pour l'essentiel exprimé lors du passage sous la calandre. Pour les couches de silicate alcalin hydraté faisant l'objet d'un séchage on utilise couramment la glycérine qui est par ailleurs généralement présente dans la composition du matériau intumescent lui-même.

Les particules destinées à favoriser l'apparition des bulles aux interfaces sont avantageusement appliquées avec la glycérine. De cette façon une distribution régulière est facilement obtenue sans nécessiter de dispositif ou d'opération supplémentaire. Les particules sont simplement dispersées dans la glycérine avant l'application de celle-ci.

L'invention est décrite de façon détaillée dans la suite en faisant référence aux figures qui représentent:
- figure 1, une structure schématique typique d'un vitrage anti-feu;
- figure 2, un mode de réalisation d'un vitrage selon l'invention;
- figure 3, un autre mode de réalisation d'un vitrage selon l'invention;
- figure 4 un exemple de réalisation de vitrage selon l'invention comportant deux couches intumescentes;
- la figure 5 est un exemple dans lequel les particules initiatrices sont situées entre deux couches intumescentes;
- figure 6, une vue schématique de l'assemblage d'un vitrage selon l'invention comportant un calandrage.

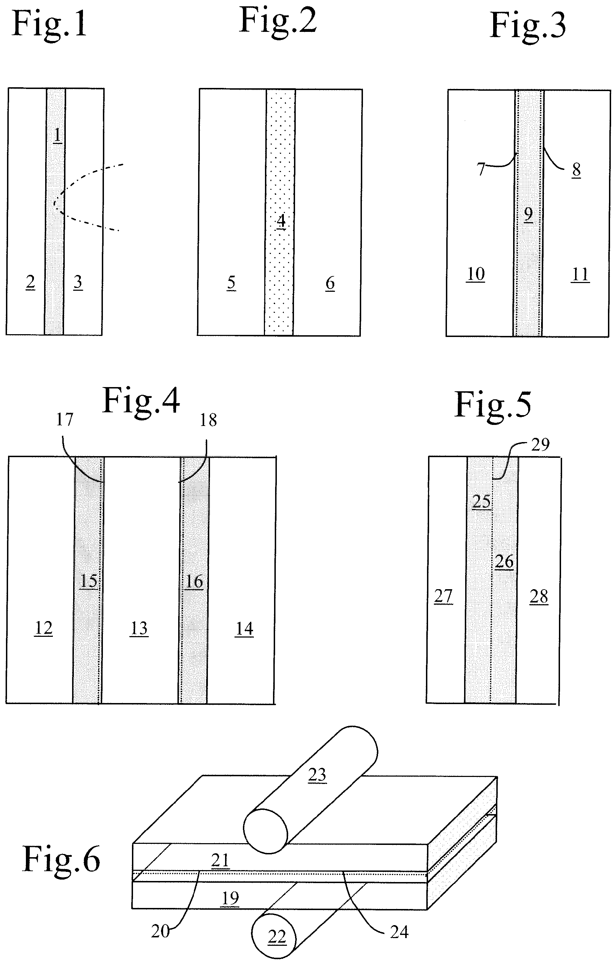

Les vitrages anti-feu selon l'invention comportent typiquement (figure 1) une couche de silicate alcalin hydraté 1 entre deux feuilles de verre 2 et 3.

L'exposition au feu de ces vitrages conduit à l'expansion de multitudes de bulles dans le silicate par évaporation de l'eau qu'il renferme et formation d'une mousse opaque de silicate qui fait écran aux rayonnements et au passage des flammes même lorsque la feuille de verre directement exposée se brise sous le choc thermique. Si l'expansion est irrégulière le risque apparaît de voir la feuille de verre exposée se rompre brutalement avec projection d'un fragment de verre et le plus souvent d'une partie de la couche intumescente comme indiqué par le trait discontinu. Dès lors le vitrage n'assure plus convenablement la protection attendue.

La figure 2 illustre schématiquement en coupe un vitrage constitué selon l'invention. Comme précédemment une couche de matériau intumescent de silicate alcalin hydraté 4 est prise entre deux feuilles de verre 5 et 6. La couche de silicate contient des particules initiatrices de bulles, représentées par des points distribués uniformément dans la masse du silicate. Pour la clarté de la représentation les particules sont apparentes. En pratique selon l'invention leurs dimensions sont choisies de telle sorte qu'elles ne sont pas décelables à l'oeil nu. Elles sont par ailleurs en nombre tel qu'elles n'ont pas d'effet négatif sur les qualités optiques du vitrage.

Pour les raisons indiquées précédemment si la distribution des particules initiatrices de bulles peut se faire dans la masse, une distribution sur la surface du vitrage suffit normalement à assurer l'effet recherché, pour autant que l'épaisseur de la couche de silicate reste dans les limites les plus usuelles. La figure 3 illustre le cas d'un vitrage selon l'invention dans lequel les particules représentées par les lignes de points 7 et 8 sont localisées aux interfaces entre la couche de silicate alcalin hydraté 9 et les deux feuilles de verre 10 et 11.

Dans l'exemple de la figure 3 les deux interfaces comportent des particules d'initiations des bulles. En pratique lorsque la couche intumescente est suffisamment mince l'application sur une seule des interfaces suffit pour garantir un développement uniforme de bulles. La figure 4 illustre une disposition de ce type. Sur cette figure un vitrage anti-feu selon l'invention est composé de trois feuilles de verre 12, 13 et 14 et de deux couches intumescentes 15 et 16.

L'assemblage de plusieurs couches intumescentes et des feuilles de verre permet d'accroître la résistance au feu.

Dans l'exemple de la figure 4 le positionnement des éléments les uns par rapport aux autres résulte le plus habituellement de la manière dont les éléments constitutifs sont produits. Un vitrage typique comporte par exemple deux feuilles de verre 12 et 14 de 3mm chacune et une feuille 13 de 8mm. Dans ce cas la fabrication la plus usuelle consiste à former les couches intumescentes par séchage d'une solution de silicate directement appliquée sur les feuilles de verre 12 et 14. La production d'éléments unitaires identiques est économiquement intéressante. Les deux feuilles portant les couches de silicate séché sont ensuite assemblées à la feuille de verre 13.

Par commodité les particules initiatrices des bulles sont appliquées sur la couche de silicate et se trouvent donc à l'interface avec la feuille de verre 13 comme représenté par les pointillés 17 et 18.

Dans cette présentation les particules se trouvent à l'interface la plus distante de l'extérieur du vitrage et donc de l'exposition potentielle au choc thermique. En pratique, on constate que ceci ne modifie pas de manière négative le comportement du vitrage vis-à-vis du risque de projection. La présence des particules dans les conditions énoncées ci-dessus permet d'éviter efficacement ces projections.

Une couche intumescente peut être constituée de plusieurs couches accolées. L'exemple de la figure 5 illustre ce type de structure. Dans le cas présenté deux feuilles de verre 27 et 28 préalablement revêtues chacune d'une couche intumescente 25 et 26, sont assemblées en mettant face à face les couches intumescentes. L'application des particules représentées par la ligne pointillée 29 dans ce cas peut se situer au coeur de la couche intumescente réunissant les deux couches élémentaires.

Les couches intumescentes peuvent encore être constituées à partir de plusieurs feuilles séparées de tout support après leur formation. Dans ce cas l'assemblage peut conduire à disposer les particules soit entre plusieurs feuilles constituant la couche intumescente globale soit à l'interface de cette couche et d'une des feuilles de verre ou encore selon toutes les combinaisons possibles entre les feuilles de matériau intumescent et/ou entre ces feuilles et les feuilles de verre.

La figure 6 illustre un mode d'assemblage des vitrages selon l'invention. Dans cet exemple une feuille de verre 19 sur laquelle une couche de silicate alcalin 20 a été préalablement constituée par séchage d'une solution, est assemblée à une feuille de verre 21 par pression au moyen d'un dispositif de calandrage schématisé par les deux rouleaux 22, 23.

Pour chasser l'air résiduel pris entre la couche de silicate 20 et la feuille de verre 21, on applique habituellement un film de glycérine dont l'excédent est expulsé sous la pression exercée par la calandre.

Les particules génératrices de bulles selon l'invention, sont avantageusement appliquées au moyen de la glycérine dans laquelle elles sont préalablement dispersées. Le film de glycérine distribue ainsi les particules de manière sensiblement uniforme à l'interface de la feuille de verre 21 et du silicate 20. Ceci est représenté de façon schématique par les pointillés 24.

Des essais sont effectués avec des vitrages comprenant systématiquement des couches intumescentes de silicate de sodium hydraté dont le rapport molaire SiO₂/Na₂O est de 3,3 la teneur en eau de 25% en poids et qui comportent en outre 15% en poids de glycérine. La couche de silicate est systématiquement de 1,65mm. Les assemblages comportent deux feuilles de verre de 3mm d'épaisseur réunis au moyen de la couche de silicate.

Sans introduction de particules initiatrices de bulles selon l'invention, les vitrages peuvent présenter une moyenne de 3 projections par m² de surface lorsqu'ils sont soumis à l'épreuve au feu normalisée (EN 1363-1, EN 1363-2)

Différents initiateurs de bulles sous forme de particules sont essayés. Un initiateur particulièrement préféré est constitué de particules de silice commercialisées par la société AGC sous le nom de "Sunsphere". Trois types de produits sont essayés qui présentent respectivement des surfaces spécifiques de 100 ("NP200"), 50 ("NP 100")et 40 m²/g ("NP30").

Les particules sont introduites avec la glycérine utilisée lors du calandrage.

La teneur en particules de type "NP30" introduites dans la glycérine est de 5, 10 et 20g/l. Le nombre de particules observé au microscope sur le vitrage s'élève respectivement à 44, 88, 176/mm².

Ces vitrages sont soumis de la même façon à l'épreuve au feu normalisée. Pour les quantités respectives de particules les projections pour les teneurs de 5 et 10 g/1 sont environ dix fois moins nombreuses que dans les exemples de référence. Pour les essais effectués avec les applications de glycérine contenant 20g/l, les projections n'apparaissent plus du tout.

Le même type d'essai effectué en introduisant les particules de NP100 conduit à la distribution suivante des particules pour 5, 10, 20g/l, à savoir 9, 17 et 40 particules par mm² de surface du vitrage. La présence de ces particules réduit de manière satisfaisante le nombre des projections dans le dernier cas (40 particules/mm²), pour les deux autres essais le nombre de projection bien que limité reste trop important pour une utilisation satisfaisante.

## Revendications

1. Vitrage anti-feu comprenant au moins une couche intumescente constituée d'un silicate alcalin hydraté disposée entre des feuilles de verre, dans lequel pour favoriser une expansion bien distribuée lors des épreuves au feu, des éléments de nucléation sont introduits dans le matériau intumescent ou à l'interface de celui-ci avec une feuille de verre, les éléments de nucléation étant d'au moins 5 par mm² de surface.

2. Vitrage selon la revendication 1 dans lequel les éléments de nucléation sont constitués de particules solides au contact du matériau de la couche intumescente.

3. Vitrage selon la revendication 2 dans lequel les éléments de nucléation sont des particules de dimensions au plus égales à 20*µ* et de préférence au plus égales à 10*µ*.

4. Vitrage selon l'une des revendications 2 ou 3 dans lequel les éléments de nucléation sont des particules d'un matériau dont la surface spécifique n'est pas supérieure à 200m²/g et de préférence pas supérieure à 100m²/g.

5. Vitrage selon l'une des revendications précédentes dans lequel les éléments de nucléation sont constitués de poudre de silice.

6. Vitrage selon lune des revendications précédentes dans lequel les éléments de nucléation sont constitués de poudre de verre.

7. Vitrage selon l'une des revendications précédentes dans lequel les éléments de nucléation sont introduits dans le vitrage à raison d'au moins 20/mm² de surface.

8. Vitrage selon la revendication 7 dans lequel les éléments de nucléation sont introduits dans le vitrage à raison d'au moins 50/mm² de surface.

9. Vitrage selon l'une des revendications précédentes dans lequel les éléments de nucléation sont dispersés dans le matériau constituant la couche intumescente.

10. Vitrage selon l'une des revendications 1 à 8 dans lequel les éléments de nucléation sont préférentiellement appliqués sur une ou plusieurs interfaces verre/matériau intumescent.

11. Vitrage selon la revendication 10 dans lequel les éléments de nucléation sont appliqués par introduction dans le liquide facilitant l'évacuation de l'air lorsque les vitrages sont assemblés par calandrage.

12. Vitrage selon la revendication 11 dans lequel les éléments de nucléation sont mis en suspension dans de la glycérine.

## Patentansprüche

1. Brandschutzverglasung, umfassend mindestens eine aus einem hydratisierten Alkalisilikat gebildete intumeszierende Schicht, die zwischen Glasplatten angeordnet ist, bei der zur Begünstigung einer gut verteilten Expandierung bei Brandversuchen Nukleierungselemente in das intumeszierende Material oder an dessen Schnittstelle mit einer Glasplatte eingeführt sind, wobei mindestens 5 Nukleierungselemente pro mm² Oberfläche vorliegen.

2. Verglasung nach Anspruch 1, wobei die Nukleierungselemente aus festen Partikeln in Kontakt mit dem Material der intumeszierenden Schicht gebildet sind.

3. Verglasung nach Anspruch 2, wobei die Nukleierungselemente Partikel mit Abmessungen von höchstens gleich 20 µm und vorzugsweise von höchstens gleich 10 µm sind.

4. Verglasung nach einem der Ansprüche 2 oder 3, wobei die Nukleierungselemente Partikel eines Materials sind, dessen spezifische Oberfläche höchstens 200 m²/g und vorzugsweise höchstens 100 m²/g beträgt.

5. Verglasung nach einem der vorhergehenden Ansprüche, wobei die Nukleierungselemente aus Siliciumdioxidpulver gebildet sind.

6. Verglasung nach einem der vorhergehenden Ansprüche, wobei die Nukleierungselemente aus Glaspulver gebildet sind.

7. Verglasung nach einem der vorhergehenden Ansprüche, wobei die Nukleierungselemente in einem Anteil von mindestens 20/mm² Oberfläche in die Verglasung eingeführt sind.

8. Verglasung nach Anspruch 7, wobei die Nukleierungselemente in einem Anteil von mindestens 50/mm² Oberfläche in die Verglasung eingeführt sind.

9. Verglasung nach einem der vorhergehenden Ansprüche, wobei die Nukleierungselemente in dem die intumeszierende Schicht bildenden Material dispergiert sind.

10. Verglasung nach einem der Ansprüche 1 bis 8, wobei die Nukleierungselemente vorzugsweise auf eine oder mehrere Schnittstellen zwischen Glas und intumeszierendem Material aufgebracht sind.

11. Verglasung nach Anspruch 10, wobei die Nukleierungselemente durch Einführung in die Flüssigkeit, die bei dem Zusammenbau der Verglasungen durch Kalandrieren die Entlüftung ermöglicht, aufgebracht werden.

12. Verglasung nach Anspruch 11, wobei die Nukleierungselemente in Glycerin suspendiert sind.

## Claims

1. Fireproof glazing comprising at least one intumescent layer formed of a hydrated alkali metal silicate positioned between glass sheets, in which, in order to promote a well-distributed expansion during fire tests, nucleation elements are introduced into the intumescent material or at the interface of the latter with a glass sheet, there being at least 5 nucleation elements per mm² of surface area.

2. Glazing according to Claim 1, in which the nucleation elements are formed of solid particles in contact with the material of the intumescent layer.

3. Glazing according to Claim 2, in which the nucleation elements are particles with dimensions at most equal to 20 µ and preferably at most equal to 10 µ.

4. Glazing according to either of Claims 2 and 3, in which the nucleation elements are particles of a material, the specific surface of which is not greater than 200 m²/g and preferably not greater than 100 m²/g.

5. Glazing according to one of the preceding claims, in which the nucleation elements are formed of silica powder.

6. Glazing according to one of the preceding claims, in which the nucleation elements are formed of glass powder.

7. Glazing according to one of the preceding claims, in which the nucleation elements are introduced into the glazing in a proportion of at least 20/mm² of surface area.

8. Glazing according to Claim 7, in which the nucleation elements are introduced into the glazing in a proportion of at least 50/mm² of surface area.

9. Glazing according to one of the preceding claims, in which the nucleation elements are dispersed in the material forming the intumescent layer.

10. Glazing according to one of Claims 1 to 8, in which the nucleation elements are preferably applied to one or more glass/intumescent material interfaces.

11. Glazing according to Claim 10, in which the nucleation elements are applied by introduction in the liquid facilitating the evacuation of the air when the glazings are assembled by calendering.

12. Glazing according to Claim 11, in which the nucleation elements are suspended in glycerol.
